# EUROPÄISCHE PATENTANMELDUNG

(11) **EP 2 657 801 A2**
(43) Veröffentlichungstag der Anmeldung: **30.10.2013**
(21) Anmeldenummer: 13165571.4
(22) Anmeldetag: 26.04.2013
(51) Int. Cl.: G05B 19/418

(54) **Überwachung eines Herstellungsprozesses**

(30) Priorität: 27.04.2012 DE 102012103753
(71) Anmelder: Deutsches Zentrum für Luft- und Raumfahrt e.V., 51147 Köln (DE)
(72) Erfinder: Liebers, Nico, 38102 Braunschweig (DE); Raddatz, Florian, 22393 Hamburg (DE); Schadow, Florian, 18057 Rostock (DE)
(74) Vertreter: Aisch, Sebastian

(57) **Zusammenfassung**

Die Erfindung betrifft ein Verfahren zur Überwachung eines Herstellungsprozesses zur Herstellung eines Formbauteils (3) mittels eines formgebenden Werkzeuges (2), bei dem ein an dem Formwerkzeug (2) applizierter Schallgeber (4) durch ein elektrisches Signal zum Aussenden eines Schallimpulses in das mit dem Formwerkzeug (2) kommunizierend verbundenen Formbauteil (3) angeregt, der ausgesendete Schallimpuls nach Passieren des Formbauteils (3) von einem an dem Formwerkzeug (2) applizierten Schallsensor (5) empfangen und der empfangene Schallimpuls zur Überwachung des Herstellungsprozesses ausgewertet wird, wobei Aussenden und/oder Empfangen des Schallimpulses mittels jeweils eines piezoelektrischen Elementes (4, 5) und/oder Schallsensors erfolgt.

## Beschreibung

Die Erfindung betrifft ein Verfahren zur Überwachung eines Herstellungsprozesses zur Herstellung eines Formbauteils mittels eines formgebenden Werkzeuges, bei dem ein an dem Formwerkzeug applizierter Schallgeber durch ein elektrisches Signal zum Aussenden eines Schallimpulses in das mit dem Formwerkzeug kommunizierend verbundene Formbauteil angeregt, der ausgesendete Schallimpuls nach Passieren des Formbauteils von einem an dem Formwerkzeug applizierten Schallsensor empfangen und der empfangene Schallimpuls zur Überwachung des Herstellungsprozesses ausgewertet wird.

Die Erfindung betrifft ebenso eine Vorrichtung zur Überwachung eines Herstellungsprozesses zur Herstellung eines Formbauteils hierzu.

Bei der Herstellung von Formbauteilen aus faserverstärkten Kunststoffen, kurz Faserverbundbauteile, werden in der Regel Faserhalbzeuge in ein Formwerkzeug eingebracht, das die spätere Bauteilgeometrie aufweist. Durch Drapieren des Faserhalbzeuges an der formgebenden Oberfläche des Formwerkzeuges nimmt das Faserhalbzeug die Form der Oberfläche des Formwerkzeuges an und bildet so die spätere Bauteilgeometrie. Anschließend wird das in das Formwerkzeug eingebrachte Faserhalbzeug mit einem Matrixharz infiltriert, um nach Aushärtung bzw. Polymerisation des Matrixharzes das faserverstärkte Kunststoffbauteil zu erhalten.

Aufgrund der vorteilhaften Eigenschaften von faserverstärkten Kunststoffbauteilen, bei relativ geringem Gewicht eine sehr hohe Festigkeit bzw. Steifigkeit aufzuweisen, werden derartige Faserverbundbauteile vermehrt auch in sicherheitskritischen Bereichen der Fahrzeug- und Flugzeugtechnik eingesetzt. Gerade im Bereich der Serienproduktion ist es hierbei sehr wichtig, dass solche Bauteile mit einer gleichbleibend hohen Qualität hergestellt werden, damit sie in ihrem späteren Einsatzzweck in sicherheitskritischen Bereichen ihre Funktion erfüllen können.

Aufgrund der Tatsache, dass eine Vielzahl von Faktoren auf die chemische Vernetzungsreaktion des Matrixharzes Einfluss haben, ist die Überwachung des Herstellungsprozesses, insbesondere der Prozess der Aushärtung des Matrixharzes, ein wesentlicher Bestandteil der Qualitätskontrolle derartiger Formbauteile.

Aus der DE 197 37 276 C2 ist beispielsweise ein Verfahren zur Überwachung der Aushärtung von Duroplasten bekannt, bei dem eine in einem Formwerkzeug befindliche Formmasse mit Ultraschallwellen beschallt wird, die von einem ersten Ultraschall-Wandler in die Formmasse ausgesendet und von einem zweiten Ultraschall-Wandler empfangen und entsprechend ausgewertet werden. Mittels eines Referenzsignals kann dabei die Differenz zwischen ausgesendeten und empfangenen Signalen zur Überwachung des Herstellungsprozesses analysiert werden.

Darüber hinaus ist aus der DE 198 34 797 C2 ein Verfahren zum qualitätsgesteuerten Herstellen und Verarbeiten von Kunststoffen bekannt, bei dem akustische und/oder dielektrische Sensoren in das Formwerkzeug eingebracht und entsprechende akustische und/oder dielektrische Kennwerte des in dem Formwerkzeug befindlichen Bauteils ermittelt werden. Die Qualität des Formbauteils in dem Werkzeug wird dann mittels eines Expertensystems aus den gemessenen Kennwerten bewertet.

Die Verwendung derartiger Ultraschallprüfköpfe hat in der Praxis jedoch den Nachteil gezeigt, dass aufgrund der Ankopplung der Ultraschallprüfköpfe an das Formwerkzeug Ungenauigkeiten in der Messung entstehen können, die eine hochgenaue qualitative Überwachung insbesondere von Harz-Vernetzungsreaktionen erschweren und das Ergebnis verfälschen. Durch zahlreiche Ursachen, wie beispielsweise thermische Ausdehnung, Alterung des Koppelmittels, nicht senkrecht aufliegende Prüfköpfe auf dem Werkzeug, Rauhigkeiten von Werkzeug- und Prüfkopfoberfläche, kann sich zwischen dem Ultraschallprüfkopf und dem Werkzeug eine Luftschicht ausbilden, an der die Ultraschallwellen durch den großen Impedanzsprung nahezu zu 100 % reflektiert werden. An dieser Stelle können die ausgesendeten Schallwellen nicht mehr in das Werkzeug einkoppeln bzw. aus dem Werkzeug empfangen werden, was das Ergebnis der Ultraschallüberprüfung beeinflussen und zu Fehlinterpretationen der Kennwerte führen kann.

Zudem sind die Investitionskosten der Ultraschallprüfköpfe erheblich und die Prüfköpfe erfordern einen großen Bauraum im Formwerkzeug, wodurch Werkzeuge größer konzipiert werden müssen und somit teurer in der Anschaffung sind. Bei größeren Werkzeugen ist jedoch mehr Energie zum Erwärmen notwendig, was sich wiederum negativ auf die Herstellungskosten auswirkt.

Es ist daher Aufgabe der vorliegenden Erfindung, ein verbessertes Verfahren und eine verbesserte Vorrichtung anzugeben, mit denen insbesondere der Herstellungsprozess zur Herstellung von faserverstärkten Kunststoffbauteilen sicher überwacht werden kann.

Die Aufgabe wird mit dem gattungsgemäßen Verfahren der eingangs genannten Art erfindungsgemäß gelöst durch Aussenden und/oder Empfangen des Schallimpulses mittels jeweils eines piezoelektrischen Elementes des Schallgebers und/oder Schallsensors.

Demnach wird erfindungsgemäß vorgeschlagen, dass zum Aussenden des für die Überwachung des Bauteils vorgesehenen Schallimpulses und/oder zum Empfangen des ausgesendeten Schallimpulses jeweils ein piezoelektrisches Element verwendet wird, das den Schallimpuls in das Formwerkzeug einkoppelt bzw. den Schallimpuls mittels des piezoelektrischen Elementes aus dem Formwerkzeug empfängt.

Dabei hat sich gezeigt, dass insbesondere bei der Herstellung von Faserverbundbauteilen, insbesondere während des Herstellungsprozesses, piezoelektrische Elemente für die Überwachung des Herstellungsprozesses mittels Schallwellen besonders gut geeignet sind.

In einer ganz besonders vorteilhaften Ausführungsform besteht der Schallgeber und/oder Schallsensor ausschließlich aus dem piezoelektrischen Element, so dass nur noch ein sehr geringer Bauraum für den Schallgeber und/oder Schallsensor an dem Werkzeug bereitgestellt werden muss. Hierdurch lassen sich Schallgeber und/oder Schallsensor einfacher in das Werkzeug integrieren und reduzieren dabei die Werkzeugkosten, wobei der mechanische Eingriff in die Struktur des Werkzeuges nahezu zu vernachlässigen ist. Das jeweilige piezoelektrische Element ist somit der Schallgeber und/oder Schallsensor.

Unter dem Applizieren des Schallgebers und/oder Schallsensors an dem Formwerkzeug wird im Sinne der vorliegenden Erfindung das Anordnen des Schallgebers und/oder Schallsensors an oder in dem Formwerkzeug verstanden. So kann der Schallgeber und/oder Schallsensor bzw. das jeweilige piezoelektrische Element außen an die Werkzeugoberfläche angeordnet werden. Denkbar ist aber auch, dass der Schallgeber und/oder Schallsensor bzw. das piezoelektrische Element in das Formwerkzeug bis hin zu einem direkten Kontakt mit dem Formbauteil angeordnet wird.

Um einen möglichst einfachen Aufbau zu gewährleisten, wird der Schallgeber und/oder Schallsensor bzw. das piezoelektrische Element an dem Formwerkzeug so angebracht, dass die durch das piezoelektrische Element generierten Schallimpulse an das Formwerkzeug übertragen und anschließend auf das Formbauteil übertragen werden. Nachdem der ausgesendete Schallimpuls das Formbauteil passiert hat, wird der Schallimpuls auf das Formwerkzeug übertragen, von wo aus der Schallsensor bzw. das piezoelektrische Element das Signal detektieren kann.

Durch diese Anordnung wird der Schallimpuls direkt in der Formwerkzeugoberfläche erzeugt bzw. aus dieser empfangen, so dass der Prüfkopfvorlauf und die Grenzschicht zwischen Vorlauf und Formwerkzeug bei herkömmlichen Verfahren entfallen. Infolgedessen kann sowohl ein stärkerer Schallimpuls durch das Bauteil und Werkzeug gesandt werden sowie ein entsprechend stärkeres Signal auch empfangen werden, was sowohl eine genauere Messung ermöglicht als auch die Einsatzgrenzen des Messverfahrens bezüglich der Bauteildicke signifikant erhöht. So lassen sich beispielsweise mit einer derartigen Anordnung mittels piezoelektrischer Elemente die Anwendung der Impuls-Echo-Methode realisieren.

Vorteilhafterweise handelt es sich bei dem ausgesendeten und empfangenen Schallimpuls um einen Ultraschallimpuls.

Vorteilhafterweise weist das piezoelektrische Element ein piezoelektrisches Keramikmaterial auf.

Um einen möglichst geringen Bauraum für den Schallgeber und/oder Schallsensor bereitstellen zu müssen, ist es besonders vorteilhaft, wenn das piezoelektrische Element flächig ausgebildet ist, wodurch nur noch sehr wenig Platz für den Schallgeber und/oder Schallsensor benötigt wird.

In einer besonders vorteilhaften Ausführungsform ist das piezoelektrische Element des Schallgebers und/oder Schallsensors mittels einer Klebeschicht, mittels eines Unterdrucks und/oder mittels einer mechanischen Halterung an dem Formwerkzeug angebracht. Das piezoelektrische Element kann aber auch direkt mit dem Formwerkzeug kontaktiert sein. Alternativ kann das piezoelektrische Element über entsprechende Haltemittel mit dem Formwerkzeug kommunizierend verbunden sein.

Vorteilhafterweise kann der empfangene Schallimpuls hinsichtlich der Verzögerung und/oder Dämpfung zur Überwachung des Herstellungsprozesses ausgewertet werden. Änderungen der Laufzeit und der Amplitude der empfangenen Schallsignale können dabei dazu dienen, den Grad der Aushärtung und den morphologischen Zustand des Harzes im Fertigungsprozess zu bestimmen.

Im Übrigen wird die Aufgabe auch gelöst mit einer Vorrichtung der eingangs genannten Art zur Überwachung eines Herstellungsprozesses zur Herstellung eines Formbauteils mit
- einem Formwerkzeug zur Herstellung des Formbauteils
- mindestens einem an dem Formwerkzeug applizierten Schallgeber, der zum Aussenden eines Schallimpulses in das mit dem Formwerkzeug kommunizierend verbundene Formbauteil in Abhängigkeit von einer Anregung mit einem elektrischen Signal ausgebildet ist,
- mindestens einem an dem Formwerkzeug applizierten Schallsensor, der zum Empfangen des ausgesendeten Schallimpulses nach Passieren des Formbauteils ausgewählt ist und
- einer Auswerteeinheit zum Auswerten des empfangenen Schallimpulses zur Überwachung des Herstellungsprozesses,
wobei der Schallgeber und/oder Schallsensor jeweils ein piezoelektrisches Element zum Aussenden und/oder Empfangen des Schallimpulses aufweist.

Vorteilhafte Ausgestaltungen der Vorrichtung finden sich in den entsprechenden Unteransprüchen. So ist es beispielsweise ganz besonders vorteilhaft, wenn jeweils das piezoelektrische Element der Schallgeber und/oder Schallsensor ist. Der piezoelektrische Schallgeber und/oder piezoelektrische Schallsensor besteht somit ausschließlich aus dem piezoelektrischen Element ausschließlich.

Die Erfindung wird anhand der beigefügten Zeichnung beispielhaft näher erläutert. Es zeigt:

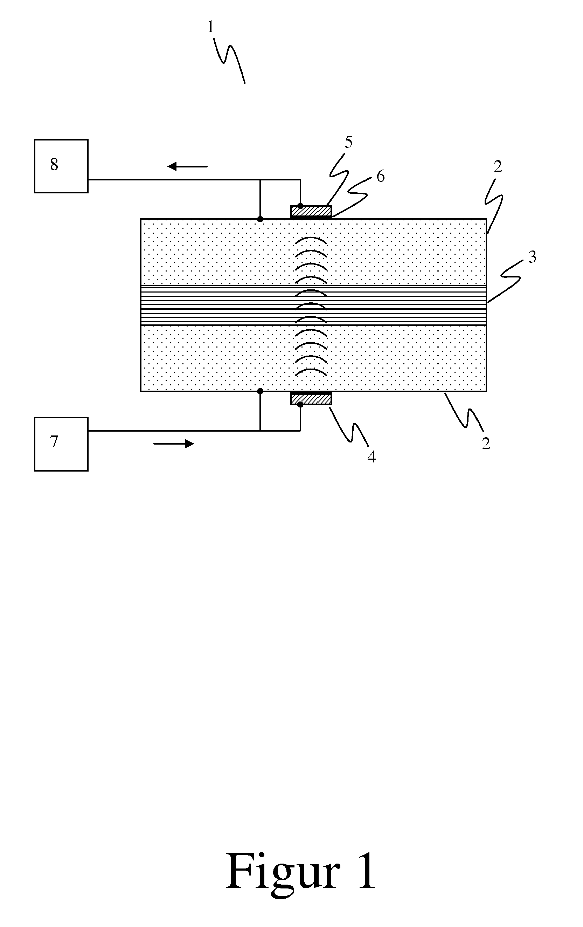

Fig. 1 - schematische Darstellung des erfindungsgemäßen Prinzips.

Figur 1 zeigt schematisch eine Vorrichtung 1, die ein Formwerkzeug 2 und ein dazwischen liegendes Formbauteil 3 aufweist. Im Ausführungsbeispiel der Figur 1 weist das Formwerkzeug 2 jeweils zwei Formwerkzeughälften auf, zwischen denen das Formbauteil 3 angeordnet ist.

Unter einem Formbauteil im Sinne der vorliegenden Erfindung wird dabei sowohl das fertige als auch das unfertige Bauteil verstanden.

An der äußeren Kontur des Formwerkzeuges 2 ist ein erstes piezoelektrisches Element 4 als Schallgeber angeordnet, während an der gegenüberliegenden äußeren Oberfläche des Formwerkzeuges 2 ein piezoelektrisches Element 5 als Schallsensor vorgesehen ist. Sowohl das piezoelektrische Element 4 als Schallgeber als auch das piezoelektrische Element 5 als Schallsensor sind mittels einer Klebeschicht 6 an das Formwerkzeug 2 appliziert.

Über ein Signalkabel ist das piezoelektrische Element 4 als Schallgeber mit einer Signaleinheit 7 verbunden, die durch Aussenden eines elektrischen Signals an das piezoelektrische Element 4 als Schallgeber dieses entsprechend anregt, damit Schallimpulse über das Formwerkzeug 2 in das Formbauteil 3 ausgesendet werden können.

Aufgrund der Eigenschaft von piezoelektrischen Elementen, bei Anregung mit einem elektrischen Signal eine Formveränderung durchzuführen, können Schallimpulse auf das Formwerkzeug übertragen werden, die dann das Formbauteil passieren können. Gleichwohl ist der umgekehrte Weg als Sensor ebenfalls aufgrund der Eigenschaft möglich, dass bei einer Formveränderung ein elektrisches Potential von dem piezoelektrischen Element erzeugt wird, welches als elektrisches Signal abgreifbar ist.

Nach dem der von dem piezoelektrischen Element 4 ausgesendete Schallimpuls das Formbauteil 3 passiert, wird es an die zweite Hälfte des Formwerkzeugs 2 übertragen und von dem piezoelektrischen Element 5 als Schallsensor empfangen. Das piezoelektrische Element 5 wandelt nunmehr aufgrund der piezoelektrischen Eigenschaft den empfangenen Schallimpuls in ein elektrisches Signal um und leitet dieses über ein Signalkabel an eine Auswerteeinheit 8 zur Auswertung des empfangenen Schallimpulses weiter. Die Auswertung kann dabei hinsichtlich der Zeitverzögerung und/oder Amplitude bzw. Dämpfung erfolgen.

**Bezugszeichen:**

| | |
|---|---|
| 1 | Vorrichtung |
| 2 | Formwerkzeug |
| 3 | Formbauteil |
| 4 | piezoelektrisches Element als Schallgeber |
| 5 | piezoelektrisches Element als Schallsensor |
| 6 | Klebschicht |
| 7 | Signaleinheit |
| 8 | Auswerteeinheit |

## Patentansprüche

1. Verfahren zur Überwachung eines Herstellungsprozesses zur Herstellung eines Formbauteils (3) mittels eines formgebenden Werkzeuges (2), bei dem ein an dem Formwerkzeug (2) applizierter Schallgeber (4) durch ein elektrisches Signal zum Aussenden eines Schallimpulses in das mit dem Formwerkzeug (2) kommunizierend verbundenen Formbauteil (3) angeregt, der ausgesendete Schallimpuls nach Passieren des Formbauteils (3) von einem an dem Formwerkzeug (2) applizierten Schallsensor (5) empfangen und der empfangene Schallimpuls zur Überwachung des Herstellungsprozesses ausgewertet wird, **gekennzeichnet durch** Aussenden und/oder Empfangen des Schallimpulses mittels jeweils eines piezoelektrischen Elementes (4, 5) des Schallgebers und/oder Schallsensors.

2. Verfahren nach Anspruch 1, **dadurch gekennzeichnet, dass** das piezoelektrische Element ein piezoelektrisches Keramikmaterial aufweist und/oder dass das piezoelektrische Element (4, 5) flächig ausgebildet ist.

3. Verfahren nach Anspruch 1 oder 2, **dadurch gekennzeichnet, dass** der piezoelektrische Schallgeber und/oder der piezoelektrische Schallsensor aus dem piezoelektrischen Element besteht.

4. Verfahren nach einem der vorhergehenden Ansprüche, **dadurch gekennzeichnet, dass** das piezoelektrische Element des Schallgebers und/oder Schallsensors mittels einer Klebschicht (6), mittels eines Unterdrucks. und/oder mittels einer mechanischen Halterung an dem Formwerkzeug (3) angebracht wird.

5. Verfahren nach einem der vorhergehenden Ansprüche, **dadurch gekennzeichnet, dass** das piezoelektrische Element des Schallgebers und/oder Schallsensors im Formwerkzeug (3) direkt oder über Haltemittel kommunizierend verbunden ist.

6. Vorrichtung (1) zur Überwachung eines Herstellungsprozesses zur Herstellung eines Formbauteils (3) mit
- einem Formwerkzeug (2) zur Herstellung des Formbauteils (3),
- mindestens einem an dem Formwerkzeug (2) applizierten Schallgeber (4), der zum Aussenden eines Schallimpulses in das mit dem Formwerkzeug (2) kommunizierend verbundene Formbauteil (3) in Abhängigkeit von einer Anregung mit einem elektrischen Signal ausgebildet ist,
- mindestens einem an dem Formwerkzeug (2) applizierten Schallsensor (5), der zum Empfangen des ausgesendeten Schallimpulses nach Passieren des Formbauteils ausgebildet ist, und
- einer Auswerteeinheit (8) zum Auswerten des empfangenen Schallimpulses zur Überwachung des Herstellungsprozesses,
**dadurch gekennzeichnet, dass** der Schallgeber und/oder Schallsensor jeweils ein piezoelektrisches Element zum Aussenden und/oder Empfangen des Schallimpulses aufweist.

7. Vorrichtung (1) nach Anspruch 6, **dadurch gekennzeichnet, dass** das piezoelektrische Element ein piezoelektrisches Keramikmaterial aufweist und/oder das piezoelektrische Element flächig ausgebildet ist.

8. Vorrichtung nach Anspruch 6 oder 7, **dadurch gekennzeichnet, dass** der piezoelektrische Schallgeber und/oder piezoelektrische Schallsensor aus dem piezoelektrischen Element besteht.

9. Vorrichtung nach einem der Ansprüche 6 bis 8, **dadurch gekennzeichnet, dass** das piezoelektrische Element des Schallgebers und/oder Schallsensors mittels einer Klebschicht, mittels eines Unterdrucks und/oder mittels einer mechanischen Halterung an dem Formwerkzeug angeordnet ist.

10. Vorrichtung nach einem der Ansprüche 6 bis 9, **dadurch gekennzeichnet, dass** das piezoelektrische Element des Schallgebers und/oder Schallsensors mit dem Formwerkzeug direkt oder über Haltemittel kommunizierend verbunden ist.
